# EUROPEAN PATENT APPLICATION

(11) **EP 4 344 292 A1**
(43) Date of publication of application: **27.03.2024**
(21) Application number: 22831916.6
(22) Date of filing: 27.06.2022
(51) Int. Cl.: H04W 28/02

(54) **METHOD AND APPARATUS FOR REPORTING BUFFER DATA**

(30) Priority: 01.07.2021 RU 2021119192
(71) Applicant: Huawei Technologies Co., Ltd., Shenzhen, Guangdong 518129 (CN)
(72) Inventor: KHOROV, Evgeny Mikhailovich, 127051 Moscow (RU); BANKOV, Dmitry, 127051 Moscow (RU); LEVITSKY, Ilya, 127051 Moscow (RU); GUO, Yuchen, Shenzhen, Guangdong 518129 (CN); LI, Yiqing, Shenzhen, Guangdong 518129 (CN); LI, Yunbo, Shenzhen, Guangdong 518129 (CN); HUNAG, Guogang, Shenzhen, Guangdong 518129 (CN); GAN, Ming, Shenzhen, Guangdong 518129 (CN)
(74) Representative: Goddar, Heinz J.
(86) International application number: PCT/CN2022/101381
(87) International publication number: WO 2023/274102

(57) **Abstract**

This application provides a method and an apparatus for reporting buffered data. The method includes: A station STA generates a first frame, where the first frame includes first information, the first information includes time information, the time information indicates a first time, and a first buffered data packet needs to be sent within the first time; and the STA sends the first frame. In this way, the first buffered data packet can be sent in time, and a delay requirement of an urgent service is met.

## Description

This application claims priority to Russian Patent Application No. 2021119192, filed with the Russian Federal Service for Intellectual Property on July 1, 2021 and entitled "METHOD AND APPARATUS FOR REPORTING BUFFERED DATA", which is incorporated herein by reference in its entirety.

### TECHNICAL FIELD

This application relates to the field of communication technologies, and more specifically, to a method and an apparatus for reporting buffered data.

### BACKGROUND

In a network architecture of a wireless local area network, when a station (station, STA) establishes a connection to an access point (access point, AP) and needs to send a data packet to the AP, the station may send the data packet on a resource indicated by the AP. If there is no resource used to send the data packet, the STA may send a buffer status report (buffer status report, BSR) to the AP, so that the STA provides to-be-transmitted data amount information for the AP, and applies to the AP for the resource for transmitting data.

With wide application of a real-time service (real-time application, RTA), a current BSR mechanism cannot clearly reflect a delay requirement of RTA data, and cannot transfer a short-term change of data in time. Therefore, a method for reporting buffered data is urgently needed, which can meet a delay requirement of an urgent service.

### SUMMARY

This application provides a method and an apparatus for reporting buffered data, to meet a delay requirement of an urgent service.

According to a first aspect, a method for reporting buffered data is provided. The method may be performed by a station STA or a chip in the STA. The method includes: The station STA generates a first frame, where the first frame includes first information, the first information includes time information, the time information indicates a first time, and the first buffered data packet needs to be sent within the first time; and the STA sends the first frame.

The first time may also be understood as first duration.

Therefore, in this application, the STA may send the time information. The time information indicates the first time, and the first buffered data packet needs to be sent within the first time. To be specific, the STA may notify an AP of an urgency degree of the first buffered data packet. The AP may know the urgency degree of the first buffered data packet based on a value of the first time, and allocate a first resource to an urgent data packet, so that the first buffered data packet can be sent in time, thereby meeting a delay requirement of an urgent service.

With reference to the first aspect, in some implementations of the first aspect, the method further includes: The STA receives second information, where the second information indicates the first resource used by the STA to send the first buffered data packet; and the STA sends the first buffered data packet by using the first resource.

Therefore, in this application, the STA receives indication information indicating the first resource for sending the first buffered data packet, and sends the first buffered data packet by using the first resource, so that the first buffered data packet can be sent in time, thereby meeting the delay requirement of the urgent service.

With reference to the first aspect, in some implementations of the first aspect, the first information further includes first data amount information, and the first data amount information indicates a data amount of the first buffered data packet.

Therefore, in this application, the STA may report the data amount of the first buffered data packet, to be specific, the AP may know a resource that needs to be allocated to the first buffered data packet, thereby increasing a possibility of transmitting the first buffered data packet.

With reference to the first aspect, in some implementations of the first aspect, the first frame further includes a first control identifier, and the first control identifier indicates a type of the first information.

Therefore, in this application, the STA may send the first control identifier, to be specific, the AP may know the type of the first information based on the first control identifier, so that the first buffered data packet can be sent in time, thereby meeting the delay requirement of the urgent service.

With reference to the first aspect, in some implementations of the first aspect, a length of the first control identifier is 4 bits, and a length of the first information is 26 bits.

Therefore, in this application, the first control identifier may be located in an A-control subfield. To be specific, a control identifier in the A-control subfield may be used as the first control identifier to indicate that corresponding control information is the first information.

With reference to the first aspect, in some implementations of the first aspect, a length of the first control identifier is 8 bits, and a length of the first information is 22 bits.

With reference to the first aspect, in some implementations of the first aspect, the first frame includes a second control identifier and an extended control identifier, and the second control identifier and the extended control identifier jointly indicate a type of the first information.

With reference to the first aspect, in some implementations of the first aspect, a length of the second control identifier is 4 bits, a length of the extended control identifier is 4 bits, and a length of the first information is 22 bits.

Therefore, in this application, the control identifier in the A-control subfield may be used as the second control identifier, and the extended control identifier be set up to jointly indicate the type of the first information with the second control identifier, in case a reserved value corresponding to the control identifier in the A-control subfield is insufficient. The reserved value cannot indicate that the corresponding control information is the first information.

With reference to the first aspect, in some implementations of the first aspect, the method further includes: The STA determines, based on the first time, to send the first information.

Therefore, in this application, the STA may determine, based on the first time, whether to send the first information. The STA may send the first information in a necessary case, for example, when the first buffered data packet is already urgent, to request a resource used to send the first buffered data packet. In this way, the first buffered data packet can be sent in time, and the delay requirement of the urgent service is met.

With reference to the first aspect, in some implementations of the first aspect, the STA receives a buffer status report poll BSRP, where the BSRP indicates whether the STA sends the first information; and the STA determines, based on the BSRP, to send the first information.

Therefore, in this application, the STA may determine, based on a received indication of the BSRP, whether to send the first information, thereby improving flexibility of reporting buffered data.

With reference to the first aspect, in some implementations of the first aspect, the first information further includes identification information, and the identification information indicates a first traffic identifier TID to which the first buffered data packet belongs, or the identification information indicates a first access category identifier ACI to which the first buffered data packet belongs, or the identification information indicates a first TSID to which the first buffered data belongs.

With reference to the first aspect, in some implementations of the first aspect, the first information further includes second data amount information, and the second data amount information indicates a total data amount of the first TID to which the first buffered data packet belongs, or the second data amount information indicates a total data amount of the first ACI to which the first buffered data packet belongs, or the second data amount information indicates a total data amount of the first TSID to which the first buffered data packet belongs.

With reference to the first aspect, in some implementations of the first aspect, the first information further includes unit information, and the unit information indicates units of the first data amount information and the second data amount information.

Therefore, in this application, the STA may further send the TID, the ACI, or the TSID to which the first buffered data packet belongs, and the total data amount of the TID, the ACI, or the TSID to which the first buffered data packet belongs. That is, the AP may learn of information about buffered data in the STA in time, and reliability of reporting buffered data is improved.

According to a second aspect, a method for reporting buffered data is provided. The method may be performed by an access point AP or a chip in the AP. The method includes: The access point AP receives a first frame from a station STA, where the first frame includes first information, the first information includes time information, the time information indicates a first time, and a first buffered data packet needs to be sent within the first time; and the AP determines, based on the first frame, whether to allocate, to the STA, a first resource for sending the first buffered data packet.

Therefore, in this application, the STA may send the time information to the AP. The time information indicates the first time, and the first buffered data packet needs to be sent within the first time. To be specific, the AP may know an urgency degree of the first buffered data packet based on a value of the first time, and allocate the first resource to an urgent data packet, so that the first buffered data packet can be sent in time, and a delay requirement of an urgent service is met.

With reference to the second aspect, in some implementations of the second aspect, when the AP determines, based on the first frame, to allocate, to the STA, the first resource for sending the first buffered data packet, the method further includes: The AP sends second information to the STA, where the second information indicates the first resource; and the AP receives the first buffered data packet sent by the STA by using the first resource.

With reference to the second aspect, in some implementations of the second aspect, the first information further includes first data amount information, and the first data amount information indicates a data amount of the first buffered data packet.

With reference to the second aspect, in some implementations of the second aspect, the first frame further includes a first control identifier, and the first control identifier indicates a type of the first information.

With reference to the second aspect, in some implementations of the second aspect, a length of the first control identifier is 4 bits, and a length of the first information is 26 bits.

With reference to the second aspect, in some implementations of the second aspect, a length of the first control identifier is 8 bits, and a length of the first information is 22 bits.

With reference to the second aspect, in some implementations of the second aspect, the first frame includes a second control identifier and an extended control identifier, and the second control identifier and the extended control identifier jointly indicate a type of the first information.

With reference to the second aspect, in some implementations of the second aspect, a length of the second control identifier is 4 bits, a length of the extended control identifier is 4 bits, and a length of the first information is 22 bits.

With reference to the second aspect, in some implementations of the second aspect, the method further includes: The AP sends a buffer status report poll BSRP to the STA, where the BSRP indicates whether the STA sends the first information to the AP.

With reference to the second aspect, in some implementations of the second aspect, the first information further includes identification information, and the identification information indicates a first traffic identifier TID to which the first buffered data packet belongs, or the identification information indicates a first access category identifier ACI to which the first buffered data packet belongs, or the identification information indicates a first TSID to which the first buffered data belongs.

With reference to the second aspect, in some implementations of the second aspect, the first information further includes second data amount information, and the second data amount information indicates a total data amount of the first TID to which the first buffered data packet belongs, or the second data amount information indicates a total data amount of the first ACI to which the first buffered data packet belongs, or the second data amount information indicates a total data amount of the first TSID to which the first buffered data packet belongs.

With reference to the second aspect, in some implementations of the second aspect, the first information further includes unit information, and the unit information indicates units of the first data amount information and the second data amount information.

According to a third aspect, an apparatus for reporting buffered data is provided, and the apparatus includes a processing unit and a sending unit. The processing unit is configured to generate a first frame, where the first frame includes first information, the first information includes time information, the time information indicates a first time, and a first buffered data packet needs to be sent within the first time. The sending unit is configured to send the first frame.

Therefore, in this application, a STA may send the time information. The time information indicates the first time, and the first buffered data packet needs to be sent within the first time. To be specific, the STA may notify an AP of an urgency degree of the first buffered data packet. The AP may know the urgency degree of the first buffered data packet based on a value of the first time, and allocate a first resource to an urgent data packet, so that the first buffered data packet can be sent in time, thereby meeting a delay requirement of an urgent service.

With reference to the third aspect, in some implementations of the third aspect, the apparatus further includes a receiving unit. The receiving unit is configured to receive second information. The second information indicates the first resource used by the STA to send the first buffered data packet. The sending unit is further configured to send the first buffered data packet by using the first resource.

With reference to the third aspect, in some implementations of the third aspect, the first information further includes first data amount information, and the first data amount information indicates a data amount of the first buffered data packet.

With reference to the third aspect, in some implementations of the third aspect, the first frame further includes a first control identifier, and the first control identifier indicates a type of the first information.

With reference to the third aspect, in some implementations of the third aspect, a length of the first control identifier is 4 bits, and a length of the first information is 26 bits.

With reference to the third aspect, in some implementations of the third aspect, a length of the first control identifier is 8 bits, and a length of the first information is 22 bits.

With reference to the third aspect, in some implementations of the third aspect, the first frame includes a second control identifier and an extended control identifier, and the second control identifier and the extended control identifier jointly indicate a type of the first information.

With reference to the third aspect, in some implementations of the third aspect, a length of the second control identifier is 4 bits, a length of the extended control identifier is 4 bits, and a length of the first information is 22 bits.

With reference to the third aspect, in some implementations of the third aspect, the processing unit is configured to determine, based on the first time, to send the first information to the AP.

With reference to the third aspect, in some implementations of the third aspect, the transceiver unit is further configured to receive a buffer status report poll BSRP, where the BSRP indicates whether the STA sends the first information. The processing unit is configured to determine, based on the BSRP, to send the first information.

With reference to the third aspect, in some implementations of the third aspect, the first information further includes identification information, and the identification information indicates a first traffic identifier TID to which the first buffered data packet belongs, or the identification information indicates a first access category identifier ACI to which the first buffered data packet belongs, or the identification information indicates a first TSID to which the first buffered data belongs.

With reference to the third aspect, in some implementations of the third aspect, the first information further includes second data amount information, and the second data amount information indicates a total data amount of the first TID to which the first buffered data packet belongs; or the second data amount information indicates a total data amount of the first ACI to which the first buffered data packet belongs, or the second data amount information indicates a total data amount of the first TSID to which the first buffered data packet belongs.

With reference to the third aspect, in some implementations of the third aspect, the first information further includes unit information, and the unit information indicates units of the first data amount information and the second data amount information.

According to a fourth aspect, an apparatus for reporting buffered data is provided, and the apparatus includes a processing unit and a receiving unit. The receiving unit is configured to receive a first frame, where the first frame includes first information, the first information includes time information, the time information indicates a first time, and a first buffered data packet needs to be sent within the first time. The processing unit is configured to determine, based on the first frame, whether to allocate, to the STA, a first resource for sending the first buffered data packet.

Therefore, in this application, a STA may send the time information. The time information indicates the first time, and the first buffered data packet needs to be sent within the first time. To be specific, the STA may notify an AP of an urgency degree of the first buffered data packet. The AP may know the urgency degree of the first buffered data packet based on a value of the first time, and allocate the first resource to an urgent data packet, so that the first buffered data packet can be sent in time, thereby meeting a delay requirement of an urgent service.

With reference to the fourth aspect, in some implementations of the fourth aspect, the apparatus further includes a sending unit. When the AP determines, based on the first frame, to allocate, to the STA, the first resource for sending the first buffered data packet, the sending unit is configured to send second information, where the second information indicates the first resource; and the receiving unit is further configured to receive the first buffered data packet sent by the STA by using the first resource.

With reference to the fourth aspect, in some implementations of the fourth aspect, the first information further includes first data amount information, and the first data amount information indicates a data amount of the first buffered data packet.

With reference to the fourth aspect, in some implementations of the fourth aspect, the first frame further includes a first control identifier, and the first control identifier indicates a type of the first information.

With reference to the fourth aspect, in some implementations of the fourth aspect, a length of the first control identifier is 4 bits, and a length of the first information is 26 bits.

With reference to the fourth aspect, in some implementations of the fourth aspect, a length of the first control identifier is 8 bits, and a length of the first information is 22 bits.

With reference to the fourth aspect, in some implementations of the fourth aspect, the first frame includes a second control identifier and an extended control identifier, and the second control identifier and the extended control identifier jointly indicate a type of the first information.

With reference to the fourth aspect, in some implementations of the fourth aspect, a length of the second control identifier is 4 bits, a length of the extended control identifier is 4 bits, and a length of the first information is 22 bits.

With reference to the fourth aspect, in some implementations of the fourth aspect, the transceiver unit is further configured to send a buffer status report poll BSRP, where the BSRP indicates whether the STA sends the first information to the AP.

With reference to the fourth aspect, in some implementations of the fourth aspect, the first information further includes identification information, and the identification information indicates a first traffic identifier TID to which the first buffered data packet belongs, or the identification information indicates a first access category identifier ACI to which the first buffered data packet belongs, or the identification information indicates a first TSID to which the first buffered data belongs.

With reference to the fourth aspect, in some implementations of the fourth aspect, the first information further includes second data amount information, and the second data amount information indicates a total data amount of the first TID to which the first buffered data packet belongs; or the second data amount information indicates a total data amount of the first ACI to which the first buffered data packet belongs, or the second data amount information indicates a total data amount of the first TSID to which the first buffered data packet belongs.

With reference to the fourth aspect, in some implementations of the fourth aspect, the first information further includes unit information, and the unit information indicates units of the first data amount information and the second data amount information.

According to a fifth aspect, an apparatus for reporting buffered data is provided, and the apparatus includes a processor and a transceiver that is internally connected to and communicates with the processor. The processor is configured to generate a first frame, where the first frame includes first information, the first information includes time information, the time information indicates a first time, and a first buffered data packet needs to be sent within the first time. The transceiver is configured to send the first frame.

The apparatus for reporting buffered data provided in the fifth aspect is configured to perform the first aspect or any possible implementation of the first aspect. For specific details, refer to the first aspect or any possible implementation of the first aspect. Details are not described herein again.

According to a sixth aspect, an apparatus for reporting buffered data is provided, and the apparatus includes a processor and a transceiver is internally connected to and that communicates with the processor. The transceiver is configured to receive a first frame, where the first frame includes first information, the first information includes time information, the time information indicates a first time, and a first buffered data packet needs to be sent within the first time. The processor is configured to determine, based on the first frame, whether to allocate, to the STA, a first resource for sending the first buffered data packet.

The apparatus for reporting buffered data provided in the sixth aspect is configured to perform the second aspect or any possible implementation of the second aspect. For specific details, refer to the second aspect or any possible implementation of the second aspect. Details are not described herein again.

According to a seventh aspect, an apparatus for reporting buffered data is provided, and the apparatus includes a processing circuit and an output interface that is internally connected to and communicates with the processing circuit. The processing circuit is configured to generate a first frame, where the first frame includes first information, the first information includes time information, the time information indicates a first time, and a first buffered data packet needs to be sent within the first time. The output interface is configured to send the first frame.

The apparatus for reporting buffered data provided in the seventh aspect is configured to perform the first aspect or any possible implementation of the first aspect. For specific details, refer to the first aspect or any possible implementation of the first aspect. Details are not described herein again.

According to an eighth aspect, an apparatus for reporting buffered data is provided, and the apparatus includes a processing circuit and an input interface that is internally connected to and communicates with the processing circuit. The input interface is configured to receive a first frame, where the first frame includes first information, the first information includes time information, the time information indicates a first time, and a first buffered data packet needs to be sent within the first time. The processing circuit is configured to determine, based on the first frame, whether to allocate, to the STA, a first resource for sending the first buffered data packet.

The apparatus for reporting buffered data provided in the eighth aspect is configured to perform the second aspect or any possible implementation of the second aspect. For specific details, refer to the second aspect or any possible implementation of the second aspect. Details are not described herein again.

According to a ninth aspect, an embodiment of this application provides a computer-readable storage medium, configured to store a computer program. The computer program includes instructions used for performing the method according to the first aspect or any possible implementation of the first aspect.

According to a tenth aspect, an embodiment of this application provides a computer-readable storage medium, configured to store a computer program. The computer program includes instructions used for performing the method according to the second aspect or any possible implementation of the second aspect.

According to an eleventh aspect, an embodiment of this application provides a computer program. The computer program includes instructions used for performing the method according to the first aspect or any possible implementation of the first aspect.

According to a twelfth aspect, an embodiment of this application provides a computer program. The computer program includes instructions used for performing the method according to the second aspect or any possible implementation of the second aspect.

According to a thirteenth aspect, an embodiment of this application provides a communication system. The communication system includes the apparatus for reporting buffered data provided in the third aspect, the fifth aspect, or the seventh aspect, and the apparatus for reporting buffered data provided in the fourth aspect, the sixth aspect, or the eighth aspect.

### BRIEF DESCRIPTION OF DRAWINGS

FIG. 1 is a schematic diagram of a communication system applicable to embodiments of this application;
FIG. 2 is a schematic diagram of a structure of a BSR control field;
FIG. 3 is a schematic flowchart of a method for reporting buffered data according to this application;
FIG. 4 is a schematic diagram of a structure of a field of a first frame according to this application;
FIG. 5 to FIG. 14 are schematic diagrams of structures of fields of first information according to this application;
FIG. 15 is a schematic diagram of a structure of an apparatus for reporting buffered data used in a STA according to this application; and
FIG. 16 is a schematic diagram of a structure of an apparatus for reporting buffered data used in an AP according to this application.

### DESCRIPTION OF EMBODIMENTS

The following describes technical solutions of this application with reference to accompanying drawings.

Embodiments of this application may be applied to a wireless local area network (wireless local area network, WLAN). Currently, standards used in the WLAN are the institute of electrical and electronics engineer (institute of electrical and electronics engineers, IEEE) 802.11 series. The WLAN may include a plurality of basic service sets (basic service sets, BSSs), and network nodes in the BSS are a station (station, STA) and an access point (access point, AP). Each BSS may include one AP and a plurality of STAs associated with the AP.

The AP in embodiments of this application may also be referred to as a wireless access point, a hotspot, or the like. The AP is an access point used by a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects the wired network and a wireless network. A main function of the AP is to connect wireless network clients together, and then connect the wireless network to the Ethernet. Optionally, the AP may be a device that supports the 802.11ax standard. Further, optionally, the AP may be a device that supports a plurality of WLAN standards such as 802.11ac, 802.11n, 802.11g, 802.11b, 802.11a, and a later version.

The STA in embodiments of this application may be a wireless communication chip, a wireless sensor, or a wireless communication terminal. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function. Optionally, the STA may support the 802.11ax standard. Further, optionally, the STA may support the plurality of WLAN standards such as 802.11ac, 802.11n, 802.11g, 802.11b, and 802.11a, and the later version.

In embodiments of this application, the STA or the AP includes a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in embodiments of this application is not particularly limited in embodiments of this application, provided that the entity can run a program that records code of the method provided in embodiments of this application to perform communication according to the method provided in embodiments of this application. For example, the entity for performing the method provided in embodiments of this application may be a STA, an AP, or a functional module that is in the STA or the AP and that can invoke and execute the program.

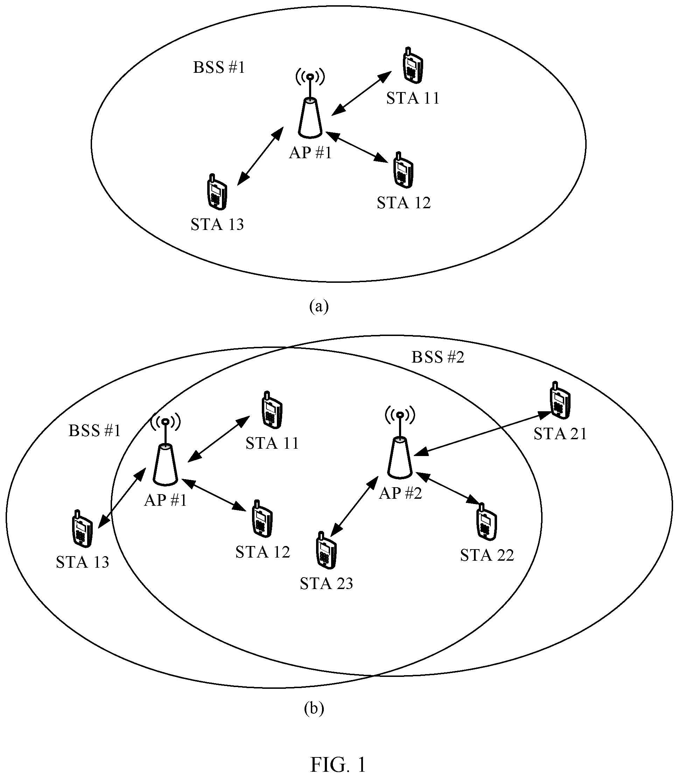

FIG. 1 is a schematic diagram of a network architecture of a wireless local area network applicable to an embodiment of this application. As shown in (a) in FIG. 1, one BSS may include one AP and one or more STAs associated with the AP. The network architecture of the wireless local area network may further include a plurality of BSSs. For example, as shown in (b) in FIG. 1, the figure shows two BSSs, and an overlapping part of the two BSSs is an OBSS. A BSS #1 includes an AP #1, a STA 11, a STA 12, and a STA 13, and a BSS #2 includes an AP #2, a STA 21, a STA 22, and a STA 23. The STA 11, the STA 12, the STA 22, and the STA23 form the overlapping part of the two BSSs. Each BSS includes one AP and a plurality of STAs. In one BSS, data may be transmitted between an AP and each STA, and data may be transmitted between a plurality of STAs. Alternatively, communication may be performed between the AP #1 and the AP #2, and communication may also be performed between STAs included in the two BSSs.

It should be understood that FIG. 1 is merely an example and should not constitute a limitation on the network architecture of the wireless local area network applicable to this application. For example, the network architecture may alternatively include more BSSs, each BSS may alternatively include more STAs, or some BSSs may alternatively not include an AP. An area in which a plurality of BSSs overlap may alternatively include more STAs. This is not limited herein in this embodiment of this application.

A real-time service (real-time application, RTA) represents a wireless service with a low-delay characteristic, and generally has a high transmission priority. For example, the RTA service may be:
a service with a large capacity and frequent transmission, for example, a service whose access category (access category, AC) is an interactive video (virtual reality (virtual reality, VR), augmented reality (augmented reality, AR)), a medical application, or a real-time video service;
a service with a large capacity and infrequent transmission, for example, a service whose AC is an urgent service;
a service with a small capacity and frequent transmission, for example, a service whose AC is a mobile game, robotics, industrial automation, a cloud game, or uncrewed aerial vehicle control; or
a service with a small capacity and infrequent transmission, for example, a service whose AC is a control instruction or an Internet of Things.

Generally, one AC may match two traffic identifiers (traffic identifiers, TIDs).

In the network architecture of the wireless local area network, when a STA establishes a connection to an AP associated with the STA and needs to send a data packet to the AP, the STA may send the data packet on a resource indicated by the AP. If there is no resource used to send the data packet, the STA may send a buffer status report (buffer status report, BSR) to the AP, so that the STA provides to-be-transmitted data amount information for the AP, and applies to the AP for a resource for transmitting data.

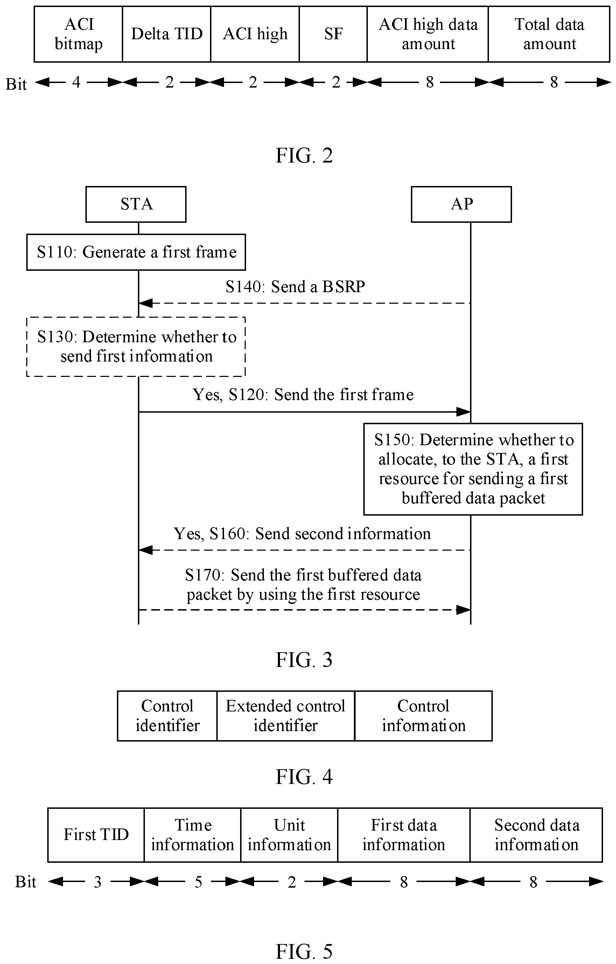

In a BSR reporting mechanism of an uplink multiple user (uplink multiple user, UL MU) operation in the 802.11ax standard, a non-AP STA may report buffer status information of the non-AP STA to the AP, to assist the AP in allocating UL MU resources. FIG. 2 is a schematic diagram of a structure of a BSR control field.

The BSR control field includes an access category index bitmap (access category index Bitmap, ACI Bitmap) subfield, a Delta TID subfield, an ACI high (ACI High) subfield, a scaling factor (scaling factor, SF) subfield, a queue size high (Queue Size High) subfield and a queue size all (Queue Size All) subfield.

Generally, a length of the BSR control field is 26 bits, a field length of the ACI Bitmap subfield is 4 bits, a field length of the Delta TID subfield is 2 bits, a field length of the ACI high (ACI High) subfield is 2 bits, a field length of the SF subfield is 2 bits, a field length of the queue size high (Queue Size High) subfield is 8 bits, and a field length of the queue size all (Queue Size All) subfield is 8 bits.

The ACI Bitmap subfield indicates an AC included in the BSR.

The Delta TID subfield may be combined with the ACI Bitmap subfield to indicate a quantity of TIDs included in the BSR.

For example, if a bit of the ACI Bitmap subfield is set to 1, this indicates that a corresponding AC is included in an entire queuing capacity.

For another example, if all bits of the ACI Bitmap subfield are set to 0, the Delta TID subfield may be combined. If the Delta TID subfield is 3, this indicates that the BSR includes 8 TIDs.

The ACI High subfield indicates an ACI with an AC with a high priority.

The STA may determine a priority of an AC based on information such as a quality of service (quality of service, QoS) delay requirement and a total amount of buffered traffic (amount of buffered traffic).

The SF subfield indicates units of the queue size high (Queue Size High) subfield and the queue size all (Queue Size All) subfield.

A unit of the SF subfield is byte.

The queue size high (Queue Size High) subfield indicates a buffered data amount of an AC with a high priority indicated by the ACI high (ACI High) subfield.

The queue size all (Queue Size All) subfield indicates a buffered data amount of all ACIs corresponding to the ACI Bitmap subfield.

When the queue size all (Queue Size All) subfield is set to a value closest to a maximum value, this may indicate that the BSR includes all medium access control service data units (medium access control service data units, MSDUs) and all aggregation-MSDUs (aggregation-MSDUs, A-MSDUs). For example, when the queue size all (Queue Size All) subfield is set to 254, this may indicate that a buffered data amount indicated by the queue size all (Queue Size All) subfield is greater than 254 (a unit is a unit indicated by the SF subfield). When the queue size all (Queue Size All) subfield is set to 255, this may indicate that a size and a location of the buffered data amount indicated by the queue size all (Queue Size All) subfield are uncertain.

For an RTA requiring a low delay, the STA may periodically report a data amount of a related TID and other information about a periodicity, or report a long-term characteristic and a parameter of a data stream by using a traffic specification (traffic specification, TSPEC) in the 802.11 standard.

It can be learned that a current mechanism for setting the BSR control field cannot clearly reflect a delay requirement of RTA data, and cannot transfer a short-term change of data in time.

This application provides a method for reporting buffered data, so that a buffered status of the data can be fed back in time, to meet a requirement of a low-delay service.

FIG. 3 is a schematic flowchart of a method 100 for reporting buffered data according to this application.

S110: A STA generates a first frame.

The first frame includes first information, the first information includes time information, the time information indicates a first time, and a first buffered data packet needs to be sent within the first time.

Optionally, the first buffered data packet is a data packet at a head of line (head of line, HOL) of the STA.

In other words, the first buffered data packet may be understood as a data packet that is to be transmitted in a queue of the STA.

For example, the first buffered data packet may be a data packet or a batch of data packets located at a queue head of the STA. The batch of data packets may be understood as a batch of data packets that are successively enqueued, and a delay between packets in the batch of data packets is less than a small threshold.

S120: The STA sends the first frame to an AP, and correspondingly the AP receives the first frame from the STA.

In a possible implementation, the first time may be a remaining delay requirement, and the remaining delay requirement may be a time that the first buffered data packet can still wait in the queue. A value of the remaining delay requirement may be equal to a difference of a delay requirement of the first buffered data packet and a time that the first buffered data packet has been waiting in the queue.

Optionally, a value (time unit TU) corresponding to the first time may be a value obtained by rounding (round) a value (time unit TU) corresponding to the remaining delay requirement.

For example, transmission of the first buffered data packet needs to be completed within 10 ms, in other words, the delay requirement of the first buffered data packet is 10 ms. Currently, the first buffered data packet has been waiting in the queue for 6 ms, and therefore transmission of the first buffered data packet needs to be completed within a remaining 4 ms. In other words, the first buffered data packet can still wait in the queue for 4 ms. In this case, the first time is 4 ms, and the STA needs to complete transmission of the first buffered data packet within 4 ms.

The STA may determine the remaining delay requirement by itself, and send the remaining delay requirement to the AP. In this case, the time information is the remaining delay requirement.

Alternatively, the STA may send the delay requirement of the first buffered data packet and a waiting time in the queue to the AP, and the AP determines the remaining delay requirement of the first buffered data based on the delay requirement and the waiting time in the queue. In this case, the time information includes the delay requirement of the first buffered data and the waiting time in the queue.

Alternatively, the STA may send, to the AP, a latest moment that transmission of the first buffered data packet needs to be completed. The AP may learn of, based on the moment, the remaining delay requirement for transmitting the first buffered data packet, that is, the first time. In this case, the time information includes the latest transmission completion moment for transmitting the first buffered data packet.

In another possible implementation, the first time may be a range of the remaining delay requirement. For example, the time information may indicate that the remaining delay requirement is less than or equal to a second threshold, or the time information may indicate that the remaining delay requirement is greater than or equal to a third threshold. In this case, if the time information indicates that the remaining delay requirement is less than or equal to the second threshold, this indicates that the STA needs to complete transmission of the first buffered data packet within a time less than the second threshold. If the time information indicates that the remaining delay requirement is greater than or equal to the third threshold, this indicates that the STA may complete transmission of the first buffered data packet within a time greater than the third threshold.

In this case, the time information may explicitly indicate the range of the remaining delay requirement, or may implicitly indicate the range of the remaining delay requirement. For example, when a field of the time information is displayed as "0", this indicates that the remaining delay requirement of the first buffered data packet is less than 1 TU. When the field of the time information is displayed as "31 ", this indicates that the remaining delay requirement of the first buffered data packet is greater than 31 TUs.

In a possible implementation, the first information further includes first data amount information, and the first data amount information indicates a data amount of the first buffered data packet.

In a possible implementation, the first information further includes identification information.

The identification information may also be understood as a data stream identifier.

The identification information indicates a first TID to which the first buffered data packet belongs, or the identification information indicates a first ACI to which the first buffered data packet belongs, or the identification information indicates a first transmitting station identification (transmitting station identification, TSID) to which the first buffered data belongs.

In other words, the first information may include an identification information field that indicates an identifier to which the first buffered data belongs.

In a possible implementation, the first information further includes second data amount information, and the second data amount information indicates a total data amount of the first TID to which the first buffered data packet belongs, or the second data amount information indicates a total data amount of the first ACI to which the first buffered data packet belongs, or the second data amount information indicates a total data amount of the first TSID to which the first buffered data packet belongs.

For example, when the identification information indicates that the first buffered data packet belongs to the first TID, the second data amount information indicates the total data amount of the first TID. When the identification information indicates that the first buffered data packet belongs to the first ACI, the second data amount information indicates the total data amount of the first ACI. When the identification information indicates that the first buffered data belongs to the first TSID, the second data amount information indicates the total data amount of the first TSID.

Optionally, the total data amount may be a specific value, or may be a range.

Optionally, the second data amount information may explicitly indicate the total data amount, or may implicitly indicate the total data amount.

For example, when a second data amount information field is set to a value closest to a maximum value, this may indicate that the total data amount includes all MSDUs and A-MSDUs. For example, when the second data amount information field is set to 254, this may indicate that the total data amount is greater than 254. When the second data amount information field is set to 255, this may indicate that a value and a location of the total data amount are uncertain.

In a possible implementation, the first information further includes unit information, and the unit information indicates units of the first data amount information and the second data amount information.

Optionally, a unit of the unit information is byte.

Optionally, the first information may also be referred to as RTABSR parameter information.

In a possible implementation, the first frame includes a first control identifier, and the first control identifier indicates a type of the first information.

For example, the first control identifier may be a control ID (control ID) field in an A-control (A-control) subfield in an HE variant HT control field.

In other words, the STA may indicate the type of the first information by using a reserved field in the control identifier.

A length of the first control identifier is 4 bits, and a length of the first information is 26 bits.

For example, when a value corresponding to the control identifier is 9, 11, or another reserved value, a corresponding control information (control information) field may be set to the first information. Optionally, when the value corresponding to the control identifier is set to 10, the corresponding control information field is the first information.

If there is no remaining reserved field in the control identifier, the length of the control identifier may be extended to 8 bits.

For example, the length of the first control identifier is 8 bits, and the length of the first information is 22 bits. The 8-bit first control identifier indicates the type of the first information.

In another possible manner, the first frame includes a second control identifier and an extended control identifier, and the second control identifier and the extended control identifier jointly indicate the type of the first information.

Optionally, a length of the second control identifier is 4 bits, a length of the extended control identifier is 4 bits, and the length of the first information is 22 bits.

Optionally, the length of the second control identifier is 4 bits, the length of the extended control identifier is 4 bits, and the length of the first information may be set based on a requirement.

Optionally, the length of the second control identifier is 4 bits, the length of the extended control identifier is 2 bits, and the length of the first information may be set based on a requirement.

In other words, lengths of the first frame, the first information, and each piece of information included in the first information may be set based on an actual situation. For example, if the length of the first frame is 30 bits, when the length of the first control identifier is 4 bits, the first information may be set to a maximum of 26 bits. When the length of the first control identifier is 8 bits, or the length of the second control identifier is 4 bits, and the length of the extended control identifier is 4 bits, the first information may be set to a maximum of 22 bits.

For example, the second control identifier may be the control ID in the A-control subfield in the HE variant HT control field, the extended control identifier may be an extended control ID (extended control ID) in the A-control subfield, and a corresponding control information (control information) field is the first information. FIG. 4 is a schematic diagram of a structure of a frame structure of the first frame in FIG. 1.

The following describes a frame structure of the first information in FIG. 1 with reference to FIG. 5 to FIG. 14.

It should be noted that the frame structure of the first frame may include a 4-bit first control identifier, or an 8-bit first control identifier, or a 4-bit second control identifier and a 4-bit extended control identifier shown in FIG. 4, and the first information. For simplicity, the following describes the frame structure of the first information.

When a value corresponding to a control identifier is 11, a length of a corresponding control information field is 26 bits. When the first information includes identification information, time information, unit information, first data amount information, and second data amount information, and the identification information indicates that a first buffered data packet belongs to a first TID, as shown in FIG. 5, a length of a field corresponding to the identification information may be allocated as 3 bits, a length of a field corresponding to the time information may be allocated as 5 bits, a length of a field corresponding to the unit information may be allocated as 2 bits, a length of a field corresponding to the first data amount information may be allocated as 8 bits, and a length of a field corresponding to the second data amount information may be allocated as 8 bits.

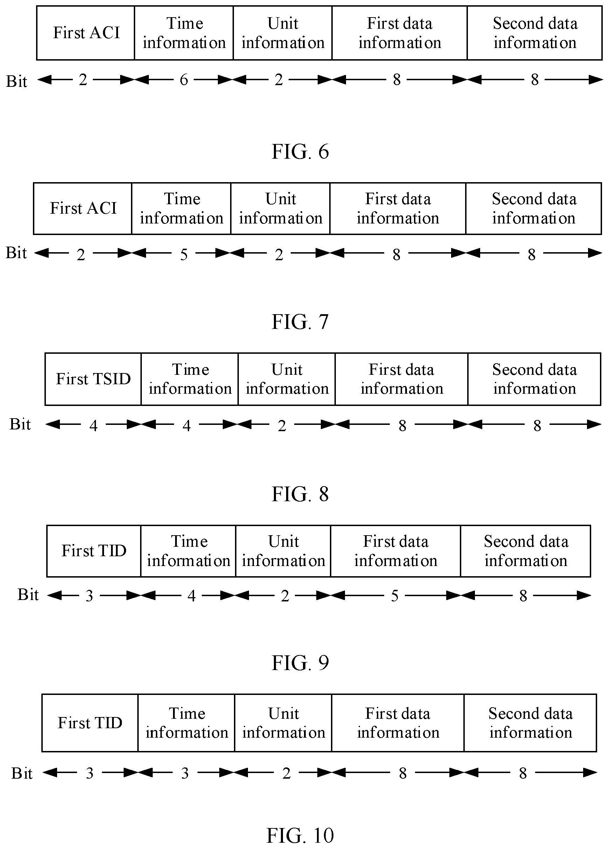

Alternatively, when the first information includes the identification information, the time information, the unit information, the first data amount information, and the second data amount information, and the identification information indicates that the first buffered data packet belongs to a first ACI, as shown in FIG. 6, the length of the field corresponding to the identification information may be allocated as 2 bits, the length of the field corresponding to the time information may be allocated as 6 bits, the length of the field corresponding to the unit information may be allocated as 2 bits, the length of the field corresponding to the first data amount information may be allocated as 8 bits, and the length of the field corresponding to the second data amount information may be allocated as 8 bits. Alternatively, as shown in FIG. 7, the length of the field corresponding to the identification information may be allocated as 2 bits, the length of the field corresponding to the time information may be allocated as 5 bits, the length of the field corresponding to the unit information may be allocated as 2 bits, the length of the field corresponding to the first data amount information may be allocated as 8 bits, and the length of the field corresponding to the second data amount information may be allocated as 8 bits. In this case, the length of the corresponding control information field may be 25 bits.

Alternatively, when the first information includes the identification information, the time information, the unit information, the first data amount information, and the second data amount information, and the identification information indicates that the first buffered data packet belongs to a first TSID, as shown in FIG. 8, the length of the field corresponding to the identification information may be allocated as 4 bits, the length of the field corresponding to the time information may be allocated as 4 bits, the length of the field corresponding to the unit information may be allocated as 2 bits, the length of the field corresponding to the first data amount information may be allocated as 8 bits, and the length of the field corresponding to the second data amount information may be allocated as 8 bits.

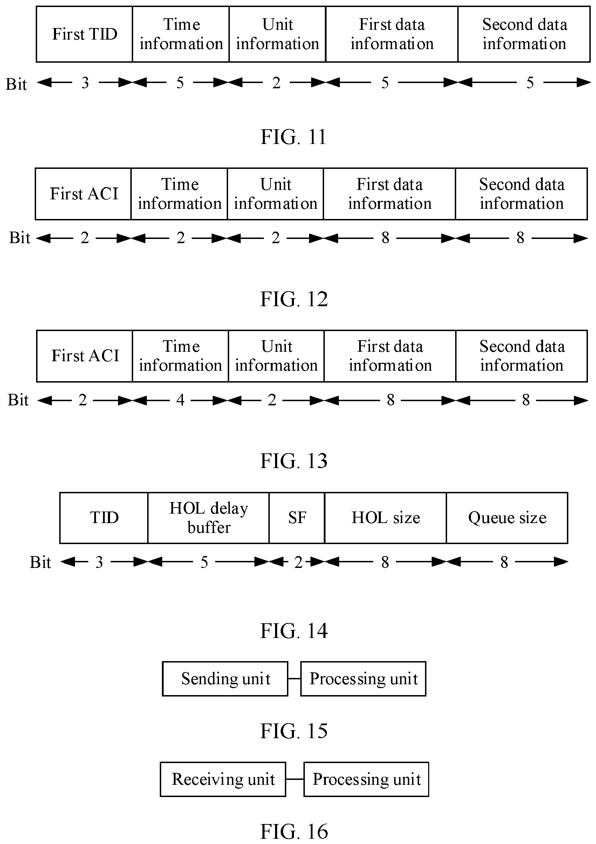

When a length of a field corresponding to the first information is 22 bits, the first information includes the identification information, the time information, the unit information, the first data amount information, and the second data amount information, and the identification information indicates that the first buffered data packet belongs to the first TID, as shown in FIG. 9, the length of the field corresponding to the identification information may be allocated as 3 bits, the length of the field corresponding to the time information may be allocated as 4 bits, the length of the field corresponding to the unit information may be allocated as 2 bits, the length of the field corresponding to the first data amount information may be allocated as 5 bits, and the length of the field corresponding to the second data amount information may be allocated as 8 bits. Alternatively, as shown in FIG. 10, the length of the field corresponding to the identification information may be allocated as 3 bits, the length of the field corresponding to the time information may be allocated as 3 bits, the length of the field corresponding to the unit information may be allocated as 2 bits, the length of the field corresponding to the first data amount information may be allocated as 8 bits, and the length of the field corresponding to the second data amount information may be allocated as 8 bits. In this case, the length of the corresponding control information field may be 24 bits. Alternatively, as shown in FIG. 11, the length of the field corresponding to the identification information may be allocated as 3 bits, the length of the field corresponding to the time information may be allocated as 5 bits, the length of the field corresponding to the unit information may be allocated as 2 bits, the length of the field corresponding to the first data amount information may be allocated as 5 bits, and the length of the field corresponding to the second data amount information may be allocated as 5 bits. In this case, the length of the corresponding control information field may be 20 bits.

Alternatively, when the first information includes the identification information, the time information, the unit information, the first data amount information, and the second data amount information, and the identification information indicates that the first buffered data packet belongs to the first ACI, as shown in FIG. 12, the length of the field corresponding to the identification information may be allocated as 2 bits, the length of the field corresponding to the time information may be allocated as 2 bits, the length of the field corresponding to the unit information may be allocated as 2 bits, the length of the field corresponding to the first data amount information may be allocated as 8 bits, and the length of the field corresponding to the second data amount information may be allocated as 8 bits. Alternatively, as shown in FIG. 13, the length of the field corresponding to the identification information may be allocated as 2 bits, the length of the field corresponding to the time information may be allocated as 4 bits, the length of the field corresponding to the unit information may be allocated as 2 bits, the length of the field corresponding to the first data amount information may be allocated as 8 bits, and the length of the field corresponding to the second data amount information may be allocated as 8 bits. In this case, the length of the corresponding control information field may be set to 24 bits, and an extended control ID field may be set to 2 bits.

In other words, the STA may design lengths of fields corresponding to the identification information, the time information, the unit information, the first data amount information, and the second data amount information based on an actual situation. The foregoing are merely examples for description, and this application is not specially limited.

Optionally, when the first information is RTA BSR parameter information, the identification information may be a data stream identifier field (for example, a TID, an ACI, or a TSID), the time information may be an HOL delay budget (HOL Delay Budget) field, the unit information field may be a scaling factor (Scaling Factor, SF) field, the first data amount information may be an HOL batch size (HOL Batch Size) field, and the second data amount information may be a queue size (Queue Size) field. A frame structure of the RTA BSR in FIG. 1 is used as an example with reference to FIG. 14. For example, the length of the field corresponding to the identification information (the TID is used as an example) is allocated as 3 bits, the length of the field corresponding to the time information is allocated as 5 bits, the length of the field corresponding to the unit information is allocated as 2 bits, the length of the field corresponding to the first data amount information is allocated as 8 bits, and the length of the field corresponding to the second data amount information is allocated as 8 bits. In this case, the frame structure of the RTABSR is shown in FIG. 14. It should be noted that a frame structure of only one bit allocation manner is used as an example herein. A frame structure of the RTA BSR in another allocation manner is similar to the frame structure of the RTABSR. For simplicity, details are not described herein again.

In a possible implementation, before step S120, the method 100 further includes step S 130 or S130 and S140.

S130: The STA determines whether to send the first information.

The STA may determine whether to send the first information in the following manners.

### Manner 1:

The STA may determine, based on the first time, whether to send the first information.

For example, when the first time is less than or equal to a first threshold, the STA determines to send the first information.

In this case, the first time is less than or equal to the first threshold, which indicates that the first buffered data needs to be transmitted within the first time that is less than or equal to the first threshold, and the first buffered data is urgent data. The STA sends the first information to the AP, so that the AP can allocate a resource to the first buffered data, and the delay requirement of the first buffered data is met.

When the first time is greater than the first threshold, the STA may not send the first information. In this case, the first time is greater than the first threshold, which indicates that the first buffered data is not particularly urgent. In this case, the STA may send a regular BSR report to the AP, for example, report a total amount of buffered data in the station to the AP, instead of sending a data amount of the first buffered data.

### Manner 2:

Before step S130, step S140 is further included.

S140: The STA receives a buffer status report poll (buffer status report poll, BSRP) from the AP, and correspondingly, the AP sends the BSRP to the STA.

The BSRP indicates whether the STA sends the first information to the AP.

In a possible implementation, a common info field (common info field) (for example, any bit of B56 to B63) or a user info field (User Info field) (for example, B39) in a BSRP field (for example, an EHT variant BSRP trigger frame field) may indicate whether the STA sends the first information to the AP.

Optionally, an RTA BSR required (RTA BSR required) parameter may be set to indicate whether the STA needs to send the first information to the AP.

For example, the common info field B56 in the BSRP field is set to the RTA BSR required parameter. When a corresponding value of the RTA BSR required parameter is 1, this indicates that the STA needs to send the first information to the AP. When the corresponding value of the RTA BSR required parameter is 0, this indicates that the STA does not need to send the first information to the AP.

In addition, it should be noted that, that the STA determines to send the first information may be understood as that the STA needs to send only the first information, that is, the RTA BSR, to the AP, and does not need to send the regular BSR. This may alternatively be understood as that the STA needs to send the first information, that is, the RTABSR, to the AP, and also need to send the regular B SR.

When the STA determines to send the first information to the AP, step S150 is performed.

S150: The AP determines, based on the first frame, whether to allocate, to the STA, a first resource for sending the first buffered data packet.

It should be noted that, the AP may receive, from a plurality of STAs, information used for requesting a resource, and the AP may determine, based on urgency degrees of data requested by the plurality of STAs to send, which STA to allocate resources.

For example, the AP may compare first time in time information sent by the plurality of STAs. It may be considered that data corresponding to a shorter first time has a higher priority, and a resource is preferentially allocated to the data with a higher priority. If among the information received by the AP to request resources from the plurality of STAs, some STAs send the first information including the first time, and some STAs send BSRs that do not include the first time, the AP may consider that sending the data corresponding to the first information including the first time is more urgent and has a higher priority, and resources are preferentially allocated to the data with a higher priority.

When the AP determines to allocate, to the STA, the first resource for sending the first buffered data packet, step S160 is performed.

S160: The AP sends second information to the STA, and correspondingly, the STA receives the second information from the AP.

The second information indicates the first resource.

S170: The STA sends the first buffered data packet by using the first resource. Correspondingly, the AP receives the first buffered data packet sent by the STA by using the first resource.

Therefore, in this application, the STA may send the time information to the AP. The time information indicates the first time, and the first buffered data packet needs to be sent within the first time. To be specific, the AP may know an urgency degree of the first buffered data packet based on a value of the first time, and allocate the first resource to an urgent data packet, so that the first buffered data packet can be sent in time, and a delay requirement of an urgent service is met.

The foregoing describes the method for reporting buffered data in this embodiment of this application. The following describes an apparatus for reporting buffered data in this embodiment of this application. The apparatus for reporting buffered data in this embodiment of this application includes an apparatus for reporting buffered data applied to the STA and an apparatus for reporting buffered data applied to the AP. It should be understood that the apparatus for reporting buffered data applied to the STA is the STA in the foregoing method, and has any function of the STA in the foregoing method. The apparatus for reporting buffered data applied to the AP is the AP in the foregoing method, and has any function of the AP in the foregoing method.

As shown in FIG. 15, an apparatus for reporting buffered data includes a processing unit and a sending unit. The processing unit is configured to generate a first frame, where the first frame includes first information, the first information includes time information, the time information indicates a first time, and a first buffered data packet needs to be sent within the first time. The sending unit is configured to send the first frame.

The apparatus for reporting buffered data applied to a STA provided in this embodiment of this application is the STA in the foregoing method, and has any function of the STA in the foregoing method. For specific details, refer to the foregoing method. Details are not described herein again.

As shown in FIG. 16, an apparatus for reporting buffered data includes a processing unit and a receiving unit. The receiving unit is configured to receive a first frame, where the first frame includes first information, the first information includes time information, the time information indicates a first time, and a first buffered data packet needs to be sent within the first time. The processing unit is configured to determine, based on the first frame, whether to allocate, to a STA, a first resource for sending the first buffered data packet.

The apparatus for reporting buffered data applied to an AP provided in this embodiment of this application is the AP in the foregoing method, and has any function of the AP in the foregoing method. For specific details, refer to the foregoing method. Details are not described herein again.

The foregoing describes the apparatus for reporting buffered data applied to the STA and the apparatus for reporting buffered data applied to the AP in embodiments of this application. The following describes possible product forms of the apparatus for reporting buffered data applied to the STA and the apparatus for reporting buffered data applied to the AP. It should be understood that a product in any form has a feature of the apparatus for reporting buffered data applied to the STA in FIG. 15, and a product in any form has a feature of the apparatus for reporting buffered data applied to the AP in FIG. 16, all fall within the protection scope of this application. It should be further understood that the following description is merely an example, and a product form of the apparatus for reporting buffered data applied to the STA and a product form of the apparatus for reporting buffered data applied to the AP in embodiments of this application are not limited thereto.

In a possible product form, the apparatus for reporting buffered data applied to the STA and the apparatus for reporting buffered data applied to the AP in embodiments of this application may be implemented by using a general bus architecture.

The apparatus for reporting buffered data applied to the STA includes a processor and a transceiver that is internally connected to and communicates with the processor. The processor is configured to generate a first frame, where the first frame includes first information, the first information includes time information, the time information indicates a first time, and a first buffered data packet needs to be sent within the first time. The transceiver is configured to send the first frame.

The apparatus for reporting buffered data applied to the AP includes a processor and a transceiver that is internally connected to and communicates with the processor. The transceiver is configured to receive a first frame, where the first frame includes first information, the first information includes time information, the time information indicates a first time, and a first buffered data packet needs to be sent within the first time. The processor is configured to determine, based on the first frame, whether to allocate, to the STA, a first resource for sending the first buffered data packet.

In a possible product form, the apparatus for reporting buffered data applied to the STA and the apparatus for reporting buffered data applied to the AP in embodiments of this application may be implemented by a general-purpose processor.

The general-purpose processor for implementing the apparatus for reporting buffered data applied to the STA includes a processing circuit and an output interface that is internally connected to and communicates with the processing circuit. The processing circuit is configured to generate a first frame, where the first frame includes first information, the first information includes time information, the time information indicates a first time, and a first buffered data packet needs to be sent within the first time. The output interface is configured to send the first frame. Optionally, the general-purpose processor may further include a storage medium, and the storage medium is configured to store instructions executed by the processing circuit.

The general-purpose processor that implements the apparatus for reporting buffered data applied to the AP includes a processing circuit and an input interface that is internally connected to and communicates with the processing circuit. The input interface is configured to receive a first frame, where the first frame includes first information, the first information includes time information, the time information indicates a first time, and the first buffered data packet needs to be sent within the first time. The processing circuit is configured to determine, based on the first frame, whether to allocate, to the STA, a first resource for sending the first buffered data packet. Optionally, the general-purpose processor may further include a storage medium, and the storage medium is configured to store instructions executed by the processing circuit.

In a possible product form, the apparatus for reporting buffered data applied to the STA and the apparatus for reporting buffered data applied to the AP in embodiments of this application may further be implemented by using the following: One or more FPGAs (field programmable gate arrays), PLDs (programmable logic devices), controllers, state machines, gate logic, discrete hardware components, any other suitable circuits, or any combination of circuits that can perform various functions described throughout this application.

It should be understood that the apparatus for reporting buffered data applied to the STA and the apparatus for reporting buffered data applied to the AP in the foregoing product forms have any function of the STA and the AP in the foregoing method embodiments, and details are not described herein again.

It should be understood that the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, with reference to the method steps and units described in embodiments disclosed in this specification, may be implemented by electronic hardware, computer software, or a combination thereof. To clearly illustrate interchangeability between hardware and software, steps and compositions of each embodiment have been described above generally according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A method for reporting buffered data, comprising:
generating, by a station STA, a first frame, wherein the first frame comprises first information, the first information comprises time information, the time information indicates a first time, and a first buffered data packet needs to be sent within the first time; and
sending, by the STA, the first frame.

2. The method according to claim 1, wherein the method further comprises:
receiving, by the STA, second information, wherein the second information indicates a first resource used by the STA to send the first buffered data packet; and
sending, by the STA, the first buffered data packet by using the first resource.

3. The method according to claim 1 or 2, wherein the first information further comprises first data amount information, and the first data amount information indicates a data amount of the first buffered data packet.

4. The method according to any one of claims 1 to 3, wherein the first frame further comprises a first control identifier, and the first control identifier indicates a type of the first information.

5. The method according to claim 4, wherein a length of the first control identifier is 4 bits, and a length of the first information is 26 bits.

6. The method according to claim 4, wherein a length of the first control identifier is 8 bits, and a length of the first information is 22 bits.

7. The method according to any one of claims 1 to 3, wherein the first frame further comprises a second control identifier and an extended control identifier, and the second control identifier and the extended control identifier jointly indicate a type of the first information.

8. The method according to claim 7, wherein a length of the second control identifier is 4 bits, a length of the extended control identifier is 4 bits, and a length of the first information is 22 bits.

9. The method according to any one of claims 1 to 8, wherein the method further comprises:
determining, by the STA based on the first time, to send the first information.

10. The method according to any one of claims 1 to 8, wherein the method further comprises:
receiving, by the STA, a buffer status report poll BSRP, wherein the BSRP indicates whether the STA sends the first information; and
determining, by the STA based on the BSRP, to send the first information.

11. The method according to any one of claims 1 to 10, wherein the first information further comprises identification information, and the identification information indicates a first traffic identifier TID to which the first buffered data packet belongs, or the identification information indicates a first access category identifier ACI to which the first buffered data packet belongs, or the identification information indicates a first transmitting station identification TSID to which the first buffered data belongs.

12. The method according to any one of claims 1 to 11, wherein the first information further comprises second data amount information, and the second data amount information indicates a total data amount of the first TID to which the first buffered data packet belongs, or the second data amount information indicates a total data amount of the first ACI to which the first buffered data packet belongs, or the second data amount information indicates a total data amount of the first TSID to which the first buffered data packet belongs.

13. The method according to claim 3 or 12, wherein the first information further comprises unit information, and the unit information indicates units of the first data amount information and the second data amount information.

14. A method for reporting buffered data, comprising:
receiving, by an access point AP, a first frame from a station STA, wherein the first frame comprises first information, the first information comprises time information, the time information indicates a first time, and a first buffered data packet needs to be sent within the first time; and
determining, by the AP based on the first frame, whether to allocate, to the STA, a first resource for sending the first buffered data packet.

15. The method according to claim 14, wherein when the AP determines, based on the first frame, to allocate, to the STA, the first resource for sending the first buffered data packet, the method further comprises:
sending, by the AP, second information to the STA, wherein the second information indicates the first resource; and
receiving, by the AP, the first buffered data packet sent by the STA by using the first resource.

16. The method according to claim 14, wherein the first information further comprises first data amount information, and the first data amount information indicates a data amount of the first buffered data packet.

17. The method according to any one of claims 14 to 16, wherein the first frame further comprises a first control identifier, and the first control identifier indicates a type of the first information.

18. The method according to claim 17, wherein a length of the first control identifier is 4 bits, and a length of the first information is 26 bits.

19. The method according to claim 17, wherein a length of the first control identifier is 8 bits, and a length of the first information is 22 bits.

20. The method according to any one of claims 14 to 16, wherein the first frame further comprises a second control identifier and an extended control identifier, and the second control identifier and the extended control identifier jointly indicate a type of the first information.

21. The method according to claim 20, wherein a length of the second control identifier is 4 bits, a length of the extended control identifier is 4 bits, and a length of the first information is 22 bits.

22. The method according to any one of claims 14 to 21, wherein the method further comprises:
sending, by the AP, a buffer status report poll BSRP to the STA, wherein the BSRP indicates whether the STA sends the first information to the AP.

23. The method according to any one of claims 14 to 22, wherein the first information further comprises identification information, and the identification information indicates a first traffic identifier TID to which the first buffered data packet belongs, or the identification information indicates a first access category identifier ACI to which the first buffered data packet belongs, or the identification information indicates a first transmitting station identification TSID to which the first buffered data belongs.

24. The method according to any one of claims 14 to 23, wherein the first information further comprises second data amount information, and the second data amount information indicates a total data amount of the first TID to which the first buffered data packet belongs, or the second data amount information indicates a total data amount of the first ACI to which the first buffered data packet belongs, or the second data amount information indicates a total data amount of the first TSID to which the first buffered data packet belongs.

25. The method according to claim 16 or 24, wherein the first information further comprises unit information, and the unit information indicates units of the first data amount information and the second data amount information.

26. An apparatus for reporting buffered data, comprising a unit configured to perform the method according to any one of claims 1 to 13 or 14 to 25.

27. An apparatus for reporting buffered data, comprising a processor and a transceiver that is internally connected to and communicates with the processor, wherein the processor is configured to generate a first frame, the first frame comprises first information, the first information comprises time information, the time information indicates a first time, and a first buffered data packet needs to be sent within the first time; and the transceiver is configured to send the first frame.

28. An apparatus for reporting buffered data, comprising a processor and a transceiver that is internally connected to and communicates with the processor, wherein the transceiver is configured to receive a first frame, the first frame comprises first information, the first information comprises time information, the time information indicates a first time, and a first buffered data packet needs to be sent within the first time; and the processor is configured to determine, based on the first frame, whether to allocate, to a STA, a first resource for sending the first buffered data packet.

29. An apparatus for reporting buffered data, comprising a processing circuit and an output interface that is internally connected to and communicates with the processing circuit, wherein the processing circuit is configured to generate a first frame, the first frame comprises first information, the first information comprises time information, the time information indicates a first time, and a first buffered data packet needs to be sent within the first time; and the output interface is configured to send the first frame.

30. An apparatus for reporting buffered data, comprising a processing circuit and an input interface that is internally connected to and communicates with the processing circuit, wherein the input interface is configured to receive a first frame, the first frame comprises first information, the first information comprises time information, the time information indicates a first time, and a first buffered data packet needs to be sent within the first time; and the processing circuit is configured to determine, based on the first frame, whether to allocate, to a STA, a first resource for sending the first buffered data packet.

31. A computer-readable storage medium, configured to store a computer program, wherein the computer program comprises instructions used to perform the method according to any one of claims 1 to 25.

32. A computer program, wherein the computer program comprises instructions used to perform the method according to any one of claims 1 to 25.
